(19) Europäisches Patentamt
European Patent Office
Office européen des brevets

(11) **EP 1 873 639 A1**

(12) **EUROPEAN PATENT APPLICATION**

(43) Date of publication:
**02.01.2008 Bulletin 2008/01**

(51) Int Cl.:
*G06F 9/46* (2006.01)

(21) Application number: **06291096.3**

(22) Date of filing: **30.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **FRANCE TELECOM**
**75015 Paris (FR)**

(72) Inventors:
• **Dang Tran, Frédéric**
**75015 Paris (FR)**
• **Krishnaswamy, Ruby**
**75015 Paris (FR)**

(54) **Decentralized dynamic allocation of data-processing resources in a utility platform**

(57) A system and a method are provided for managing the allocation of data-processing resources in a platform having a plurality of computers interconnected via a network. Each Hosted Service $HS_j$ (where $j=1,2,...$) offered by the platform, as well as a Free Pool of resources, are equipped with a Service Management Environment (SME) able to provide a utility value for each of the resources currently owned by its associated Hosted Service or Free Pool. In case a new resource is required by a given Hosted Service, this Hosted Service is able to negotiate with the Free Pool and other Hosted Services, in order to acquire the required resource from either the Free Pool or another Hosted Service after it is verified that the re-allocation of the resource leads to an increase in the total utility $U_{total}$ over the platform.

**FIG. 1**

## Description

TECHNICAL FIELD

The present invention generally relates to the issue of providing computing resources which are part of a distributed computing system, to multiple customers on demand. More particularly, it provides a method and a system for the arbitration of resource allocation in a utility-based platform.

The system concerned by the present invention is a distributed data-processing platform having a plurality of computing resources interconnected via a network. The platform includes processors, storage, network switches, and software. Software may include operating systems, middleware (links between applications, transportation of data), or applications. The available software is allocated to physical resources by a management infrastructure. The data-processing resources of this system are allocated to customer hosted services as necessary, except for the middleware and hardware needed for the execution of the allocation protocol.

The present invention can be applied to different kinds of data-processing infrastructures and platforms which offer a pooled/common set of resources to host/execute multiple applications and services, e.g. within a company computer cluster, or within a university computer center providing on-demand computing resources for talks or conferences.

BACKGROUND OF THE INVENTION

A hosting center provides computing resources to multiple customers. Each customer may use one or more services/applications. Accordingly, a customer is allocated a subset of the hosting center's computing resources, such as servers, to meet its needs. However, individual and hence global customer needs change over time, and in particular peak demands for resources occasionally occur. Since a static allocation of resources to satisfy peak demands presents the shortcoming that resources are, on the average, left underutilized, recent work focuses on dynamic resource allocation in hosting environments where one of the main issues is to resolve competing demands for resources.

Thus, adequate systems need be devised in order to provision and manage one or more computing services on a shared resource infrastructure. The system may, for example, be used by the platform services of an operator to provide computing services to a plurality of internal business units, which in turn offer services to end-customers. One important aspect of a hosting center is therefore its resource allocation scheme.

Most existing grid and utility platforms focus on the hosting of batch applications (e.g., data-mining applications) or business multi-tier applications (e.g., e-commerce server-side infrastructure) with the goal of reducing costs by sharing and consolidating data-processing resources (servers, storage space) within one or across several application-supporting platforms. The key middleware component of such utility platforms is a resource manager which is in charge of dynamically brokering and allocating resources between suppliers and consumers, in such a way that the overall utility of the system is maximized. Solutions adopted in such resource management systems include priority-based schemes, First-In-First-Serve (FIFS) schemes, prediction schemes based on analysis of the load history on the customer's deployed service, planning schemes which reserve resources for a given customer's service based on a projection of load, or economic models. Current standardization efforts in the area of Grid and Web Services such as the Open Grid Services Architectures (OGSA), or the Organization for the Advancement of Structured Information Standards (OASIS), are currently defining protocols allowing interoperability between such resource management systems for grid platforms.

The present invention is particularly well-suited for platforms which provide hosted services consisting of interactive multimedia applications. Indeed, support for interactive multimedia applications differ from batch or supercomputing applications in many respects. Multimedia applications are human-in-the-loop applications with stringent real-time constraints. They require the multiplexing of resources (i.e., interactive hardware and software) across multimedia sessions involving one or several human participants (e.g., videoconferencing session, video-on-demand session, or interactive remote desktop sessions using office software such as editing or preparing spreadsheets). Whereas computing or data-intensive batch applications need be parallelized ("gridified") in order to be optimally deployed on a grid of computing servers, the back-end server architecture of multimedia services can be deployed on top of a dynamically-sized pool of resources under the control of a decentralized utility system. Such a system can then take advantage of the inherent scalability of multimedia services, wherein client sessions can be dispatched towards several back-end computing servers and wherein there is no communication between these servers.

As an example, the back-end architecture of a "H323" or "SIP"-compliant videoconferencing service consists of several interconnected elements: multipoint control units (MCUs) handling multiparty sessions, media gateways, load balancers, and so on. The capacity (in terms of number and quality of simultaneous videoconference sessions) is dependent on the number of MCUs, which is fixed in a static deployment. Hosting such a videoconferencing service on a utility grid allows one to dynamically change the capacity of the service by drawing on a common pool of resources shared with other multimedia services.

Existing general-purpose dynamic resource management systems suffer from the following shortcomings when applied to interactive multimedia applications:

- they involve costly computations for maximizing the overall utility of the services;
- they usually rely on a centralized architecture within an application-supporting platform; and
- they do not take explicitly into account the fact that the total number of resources of any given type available on the platform is limited.

## SUMMARY OF THE INVENTION

In a first aspect of the present invention, a system is provided for managing the allocation of data-processing resources in a platform having a plurality of computers interconnected via a network. Each Hosted Service HS$_j$ (where $j$ = 1,2,...) offered by the platform, as well as a Free Pool of resources, are equipped with a Service Management Environment (SME) able to provide a utility value for each of the resources currently owned by its associated Hosted Service or Free Pool. In case a new resource is required by a given Hosted Service, this Hosted Service is able to negotiate with the Free Pool and other Hosted Services, in order to acquire the required resource from either the Free Pool or another Hosted Service after it is verified that the re-allocation of the resource leads to an increase in the total utility U$_{total}$ over the platform.

Thus, the present invention provides a dynamic allocation of data-processing resources in a utility platform where hosted services cooperate in a peer-to-peer fashion. The invention provides scalability and dependability to such a platform, while ensuring growth of a predetermined global utility value, as explained in detail below.

Furthermore, the particular role played by the Free Pool in this system allows one to take explicitly into account the fact that resources of each type available on the platform are in finite supply, as explained in detail below.

In a second aspect of the present invention, a method is provided for managing the allocation of data-processing resources in a platform having a plurality of computers interconnected via a network. Each Hosted Service offered by the platform as well as a Free Pool of resources having been equipped with a Service Management Environment (SME) able to provide a utility value for each of the resources currently owned by its associated Hosted Service or Free Pool, the method comprises the following steps:

(i) a SME initiates a request for a resource of a given type;
(ii) this requesting SME sends a "buy" message to the SMEs who currently own a resource of the same type as the one requested;
(iii) all SMEs who own a resource of that type having a respective least-utility value smaller than the utility of the resource requested, respond (P4) to the offer with a "selling proposal" message to the requesting SME along with the value of that respective least-utility value;
(iv) the requesting SME waits for such selling proposals during a predetermined time interval $T_{response}$;
(v) if the requesting SME receives no selling proposal within said time interval $T_{response}$, the requesting SME will either retry after a delay, or quit; if, on the contrary, the requesting SME has received at least one selling proposal which has not been subsequently withdrawn, the requesting SME selects one of the proposing SMEs, and sends an "accept" message to this selected SME;
(vi) the requesting SME waits for the selected SME to confirm or withdraw its selling proposal;
(vii) if the selected SME withdraws its selling proposal, the requesting SME returns to step (v); if, on the contrary, the selected SME confirms its selling proposal, the requested resource is assigned to execute the software needed by the requesting SME,

Furthermore, for any resource type i (where i =1,...,M) available on the platform, the value of utility $unot_i^j$ of a resource of type $i$ no longer in use by a Hosted Service HS$_j$ (where j=1,2,...), but still owned by this Hosted Service, and the value of utility $u_i^{freepool}$ of a resource of type i owned by the Free Pool are such that: $unot_i^j < u_i^{freepool}$.

The advantages of this method are essentially the same as the advantages of the system according to the invention.

Furthermore, it will be noted that the same method advantageously applies to both the Hosted Services and the Free Pool as far as the requesting Service Management Environment is concerned.

In a third aspect of the present invention, non-removable, or partially or totally removable data storage means are provided. These data storage means contain electronic data-processing program code instructions for executing the steps of a method as succinctly described above.

In a fourth aspect of the present invention, a data-processing device is provided. This data-processing device comprises storage means as succinctly described above.

In a fifth aspect of the present invention, a utility platform is provided. This utility platform comprises a data-processing device as succinctly described above.

Finally, in a sixth aspect of the present invention, a computer program is provided. This computer program contains instructions such that, when said program controls a programmable data-processing device, said instructions cause said data-processing device to execute a method as succinctly described above.

The advantages of these data storage means, this data-processing device, this utility platform and this computer program are essentially the same as the advantages of the system and method according to the invention.

Furthermore, it is possible, according to particular embodiments of the invention described below, to satisfy further desirable constraints.

BRIEF DESCRIPTION OF THE DRAWINGS

The invention will be explained more fully below in connection with particular embodiments provided as non-limitative examples, and with reference to the drawings, in which:

> Figure 1 illustrates schematically the architecture of a system according to an embodiment of the invention;

> Figure 2 details how some Hosted Services and the Free Pool may be related to one another according to an embodiment of the invention; and

> Figure 3 provides the flowchart of an arbitration algorithm according to an embodiment of the invention.

DETAILED DESCRIPTION

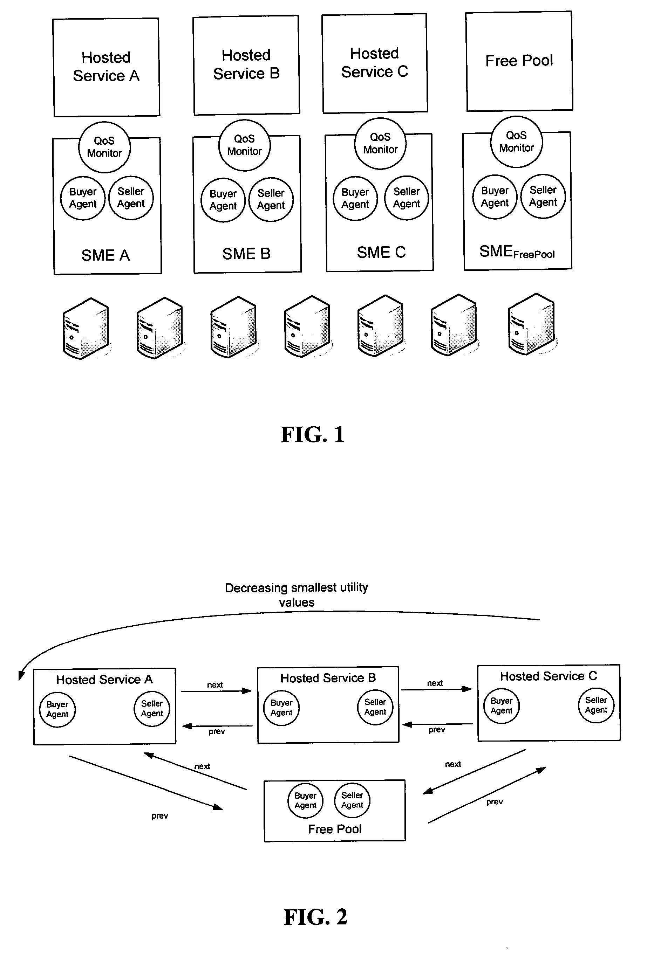

**Figure 1** illustrates the architecture of an exemplary inventive system. A utility platform comprises a set of computer resources dedicated to customer needs; at any given time, if a resource is actually being used, then it is assigned to a given Hosted Service (HS); currently unused resources are assigned to the "Free Pool". The global infrastructure may vary over time chiefly due to the addition of new resources, or removal of existing resources for reasons such as maintenance.

The present invention is most conveniently applied to the allocation of CPU (Central Processing Unit) resources; each type of resource then represents a computer or a server with a given set of attributes such as size of memory, CPU (Central Processing Unit) speed, and so on. The present invention can also be applied to the allocation of other types of resources such as storage, application software or network attributes.

The Hosted Services may be, for example, different multimedia services. For example, one customer may be provided resources for a videoconferencing system, and another one for a remote desktop service. Resource types, quantities, dependencies, and allocation patterns generally vary between Hosted Services.

A Hosted Service is, typically, a composite system built out of some basic resources. An example is a videoconferencing system which is composed of MCU software, load balancers and dispatcher software, front-end and back-end servers. The set of basic resources needed to implement a Hosted Service can change over time. The Hosted Service acquires physical resources from the utility platform. These resources will be used by the Hosted Service to execute the composite service that it offers to its end clients. As discussed below, the Hosted Service may well be remunerated by its end clients in exchange for the offered service.

Each Hosted Service is created upon agreement between a customer and the utility platform. Resources are dynamically allocated on demand to Hosted Services (HS) in such a way that well-defined, predetermined constraints (detailed below) are satisfied. Hosted Services may also have to give back resources which they currently own in order to satisfy those predetermined constraints. Arbitration takes place over the set of units common to all Hosted Services and to all resources which are part of the utility platform. As explained below, the arbitration algorithm will typically use information gathered from several Hosted Services.

Referring again to Figure 1, each Hosted Service is, according to the invention, provided with a Service Management Environment (SME). Each SME comprises software that provisions and manages resources, where provisioning refers to allocating a resource for a Hosted Service and configuring it for use within its computer environment.

One component of the SME is the Quality of Service (QoS) Monitor. Its job is to initiate a request for any resource required by its associated Hosted Service or Free Pool. In the case where the QoS Monitor is associated to a Hosted Service, it detects needs for allocation or de-allocation of resources in order to provide this service to some customer. In the case where the QoS Monitor is associated to the Free Pool, these requests allow for the return of unused resources to the Free Pool, as explained below.

Another component of the SME is the Buyer Agent (BA). The role of this component is to acquire resources for its Hosted Service or for the Free Pool by executing the resource allocation algorithm.

Yet another component of the SME is the Seller Agent (SA). This agent represents the set of resources allocated to a Hosted Service or Free Pool. The Seller Agents may be arranged in different topologies, reflecting either hierarchical or flat organizations; for illustrations purposes only, we will consider below a flat organization of Seller Agents. Also, each SA maintains a history of the utility values of those resources that it has, through the arbitration process, relinquished to other services during a predetermined past time-period $T_{history}$ (see below).

The arbitration of resources determines how resources are divided amongst the Hosted Services. Arbitration must be invoked when free resources are not sufficient to fulfill demands from the SME representing a certain customer Hosted Service. The arbitration can also be used on a periodic basis to optimize resource allocations. If resources are constrained, the arbitration may reclaim resources from some Hosted Services. As mentioned above, the Hosted Services may well be different; however, the evaluation of the condition of Hosted Services must be done in a normalized way, so that the arbitration algorithm is able to evaluate the conditions of all the Hosted Services taken together.

Different utility platforms may be assigned different criteria for allocating resources. Examples include maximizing the revenue generated by the consumption of the services hosted by these allocated resources, or maximizing the Quality of Service delivered by the services. Allocation criteria such as criticality of a service to a company can be expressed as a priority of a job, the number of QoS violations, and so on. The present invention can be applied to all these alternative scenarios provided that a unique, platform-wide metric has been defined in order to capture the relative utility of competing services. This metric will be called "utility" within the frame of the present invention.

Each SME has the means to evaluate the respective utility of each resource that is currently allocated to that SME. Each SME will preferably be provided with the means to calculate the individual value of utility for each of the resources currently allocated to it; as a variant, a central dedicated unit may be provided in order to allow the Service Management Environments to obtain these individual values of utility.

When a HS is started, it requests attribution of a minimum set of initial resources, thus enabling it to initially access the offered service. The SME is initialized with the information regarding the resource requirements specific to the applications supported by this HS, and the associated utility values. Afterwards, the utility calculation will be executed at predetermined times, for example periodically or when events considered of interest to the Hosted Service occur.

The QoS Monitor of each HS is also able to predict future resource requirements in case that the current resources allocated to the HS appear to be insufficient to meet its customer objectives. This allows the SME to request a modification of its resource allocation, either to allocate or to deallocate resources. For this purpose, the SME will provide a utility value for each new resource that it needs to acquire.

Once a new resource requirement is detected, the QoS monitor activates the Buyer Agent responsible for acquiring new resources for the Hosted Service. The Buyer Agent executes the algorithm according to the invention, which potentially involves the Buyer Agent and the Seller Agents of all the currently active Hosted Services, as well as the Seller Agent associated to the Free Pool. These agents execute a cooperative algorithm whose objective is to maximize the total utility over the platform.

A discussion will now be presented, on how the "utility" can be defined and measured for the purpose of implementing the present invention.

A first case to consider is the value of utility of a resource currently in use by a Hosted Service.

In this case, the utility may be derived from the revenue obtained by providing the service. The QoS monitor computes the utility value of each of the resources allocated to the HS. For this computation, the following data are used:

(i) the billing category of the customer who is using the multimedia service;
(ii) the number of multimedia sessions hosted by each resource of each customer category; and
(iii) current advancement of the session.

Regarding the advancement of the session, the utility is computed according to the billing policy of the system administration. For example, in the case of a fixed-price policy, the utility could be proportional to the ratio (elapsed session time)/(session total duration), while in the case of a variable-price policy where the cost increases with the duration of a session, the utility could be proportional to the remaining session time.

As mentioned above, the QoS Monitor is also preferably able to forecast the future need for resources. The required resource may be of one or several of the resource types $i = 1,...,M$. For each resource required, the QoS Monitor estimates the utility value that will be provided by a new resource if allocated to that Hosted Service. This estimation is done on the basis of the configuration of the minimum unassigned resources that should be kept by its associated Hosted Service so as to be able to respond to future planned and unplanned service demands. This is represented by configured thresholds of free resources, and when free resources are below this capacity, new resource allocation is possible. These thresholds may be set according to the calendar (time of day, week, and so on).

A second case to consider is the value of utility of a resource owned by the Free Pool.

In this case, the value of utility $u_i^{\text{freepool}}$ of each resource type $i$ (where $i = 1,...,M$) will be set to a fixed value by the platform administrator. This setvalue is preferably negative since a resource allocated to the Free Pool yields no revenue.

Finally, a third case to consider is the value of utility of a resource no longer in use by a Hosted Service $HS_j$ (where $j = 1,2,...$), but still owned by this Hosted Service.

In this case, the value of utility $unot^j$ of each resource type $i$ (where $i = 1,...,M$) will be set to a fixed value by the platform administrator. It may represent for example the cost for the Hosted Service $HS_j$ of maintaining this unexploited resource. At any rate, care will be taken by the platform administrator that, for all values of $i$ and $j$, the relation

$$unot_i^j < u_i^{\text{freepool}}$$

holds. Indeed, this makes it possible for a Hosted Service owning a resource for which is has no use, to return this resource to the Free Pool; as explained below, this operation will most conveniently be carried out within the framework of the method according to the present invention, by having the Free Pool SME initiate requests for resources.

A discussion will now be presented, on how the total utility over the platform can be maximized for the purpose of implementing the present invention.

Let C, be the total number of resources of a given type i for $i = 1,...,M$. At any given time, let $R^j$ represent the set of the numbers $r_1^j$, $r_2^j$, ..., $r_M^j$ of respective resource types allocated to a given HS $HS_j$, and let $R^{freepool}$ represent the set of the numbers $r_1^{freepool}$, $r_2^{freepool}$, ..., $r_M^{freepool}$ of respective resource types allocated to the Free Pool.

Let $U_i^j$ be the total utility associated with $r_i^j$,

$$U^j = \sum_{i=1}^{M} U_i^j$$ be the total utility associated with $R^j$,

and $$U^{freepool} = \sum_{i=1}^{M} r_i^{freepool} \cdot u_i^{freepool}$$ be the total utility associated with $R^{freepool}$. For example, positive values of $U^j$ may signify that the HS is generating revenue from the resources, and negative values of $U^j$ signify that the HS is losing revenue.

Let the total utility of the platform at any given time be denoted as $U_{total}$. It is assumed that this total utility $U_{total}$ can be calculated from the individual utilities generated at each of the Hosted Services. An example of how to compute $U_{total}$ can be that the individual local utilities are simply added, that is: $U_{total} = U^{freepool} +$

$$\sum_j U^j$$. The objective of the arbitration system is to

maximize $U_{total}$, under the constraint that each type of resource is in finite supply, that is: $r_i^{freepool} + \sum_j r_i^j = C_i$

for each $i = 1,..., M$.

In the present embodiment, the following assumptions are being made:

> (i) The execution of the Hosted Services may require one or more resources of one or more of the resource types available on the platform. However services such as videoconferencing and other multimedia applications comply with the rule that utilities are additive for any Hosted Service and for any available resource types. This implies that, in order to maximize the overall utility of the platform, it suffices to maximize the utility of each individual resource type supported by the platform.

> (ii) Applications such as videoconferencing and other IP-based multimedia services, as well as a few independently parallel scientific applications have scalable resource dependencies. That is, they can acquire several resources of either the same type or of different types sequentially.

Hence the problem of arbitration when new resources are required reduces to the problem of finding the SME which has currently been allocated a resource matching the currently requested resource type and providing the minimum utility value. The arbitration then consists in swapping the resource between the requesting SME and that SME with minimum value so as to enforce the basic principle that the total utility value is always maximized.

For this purpose, the following notations will be useful.

Let least$^j$ represent the smallest utility value among the $r_i^j$ resources of type i allocated to a given Hosted Service H$S_j$. The BA of each Hosted Service H$S_j$ keeps track of the specific resource of type i associated to this value least$^j$.

By convention, the above-mentioned utility value $u_i^{freepool}$ of a resource of type i allocated to the Free Pool will also be considered as being the "smallest" utility value of this resource, when allocated to the Free Pool.

In a particular embodiment of the system according to the invention, the BA of each SME keeps track of the SA with the next higher least-utility value and the SA with the next lower least-utility value for the same resource type. These two SA known to each BA will be referred to as SA$^{prev}$ and SA$^{next}$. When a Hosted Service is created, the BA is initiated with only the next-lower SA neighbor, which is the SA of the Free Pool. Thus, the set of Hosted Services is represented in each one of M rings maintained by the Seller and Buyer Agents, as illustrated in **Figure 2**.

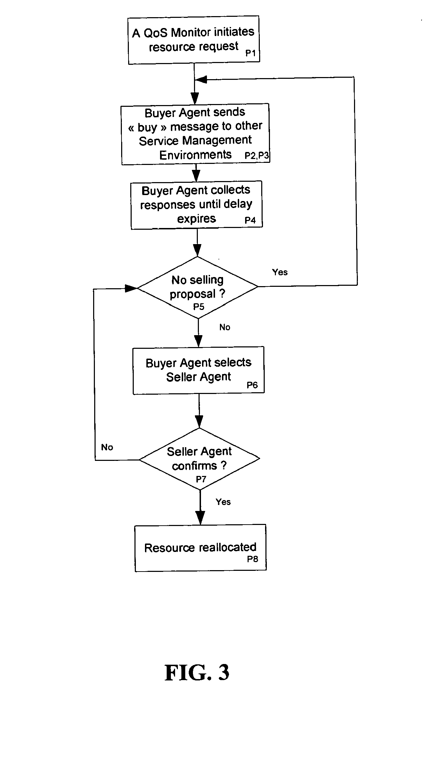

An allocation (and de-allocation) algorithm according to a particular embodiment of the invention will now be described. The successive steps of this algorithm are illustrated in **Figure 3**. They apply to each of the M resource types available on the platform.

The allocation algorithm is executed when any one of the Service Management Environments requests a new resource of a given type and with a given utility value. The main objective of this algorithm is:

> (i) to find whether there is a resource matching the needed resource type and whose current utility value is lower than the new value proposed, and
> (ii) to determine the SME(s) which is(are) currently owning at least one resource of the needed type, and

(iii) once a suitable SME is determined, to transfer the resource from the "selling" SME to the "buying" SME.

The choice of the SME from which the resource will be obtained also preferably takes into account either, or both of the following constraints:

(i) avoiding "thrashing", i.e., the risk that resources are being too frequently reallocated between the various SMEs, resulting in excessive time spent by the system on reallocation tasks by comparison to service-providing tasks, and
(ii) act with fairness (i.e., avoiding as much as possible that the same Hosted Service gets deprived at every arbitration occurrence).

The execution of the allocation algorithm also uses the services of the Seller and a Buyer Agents responsible for the Free Pool of resources.

Resource requests are initiated by the QoS Monitors (step P1). If the SME is associated to a Hosted Service, this results typically from the fact that the QoS Monitor has identified the need for a new resource of a given type to be provided by this Service to some customer. If the SME is associated to the Free Pool, this results typically from a systematic call-back for unused resources scheduled at some predetermined times and/or from a request issued by the platform manager for maintenance purposes (for example to upgrade or on the contrary to suppress a given resource).

The Buyer Agent of this SME gets then activated, and sends a "buy" message to its SA$^{prev}$ on the ring corresponding to the type of resource requested (step P2). Each receiver of the message also propagates the message to its respective SA$^{prev}$ (step P3). For all Hosted Services H$S_j$ who own a resource of type $i$ having a least-utility value least$_i^j$ smaller than the utility of the resource requested, and also for the Free Pool in case the requesting BA is associated to a Hosted Service rather than to the Free Pool and the Free Pool does own a resource of type i, this translates into a request to buy that resource with utility value least$_i^j$ or with utility value $u_i^{freepool}$. Each Seller Agents associated to a concerned Hosted Service HS$_j$ responds to the offer (step P4) with a "selling proposal" message addressed to the requesting BA along with the following information:

(i) the current least-utility value least$_i^j$ among owned resources of type i, and
(ii) the accumulated lost utility value TLU$^j$ during the past time-period $T_{history}$.
Likewise, the Free Pool, if concerned by the offer, responds with a "selling proposal" message addressed to the requesting BA along with the value of $u_i^{freepool}$.

At step P5, if no proposal is received within a predetermined time interval $T_{response}$, the requesting BA will either retry after a delay, or quit; if, on the contrary, the requesting BA has received at least one proposal, and this proposal has not been previously withdrawn (see step P7 below), the requesting BA selects one of the proposing SAs (step P6).

For the purpose of this selection, the requesting SME may select the SME with the smallest least-utility value among those proposing SMEs for whom the difference between the requested new utility and their respective least-utility value exceeds a predefined threshold $\Delta u$ > 0. This embodiment aims at avoiding thrashing, as explained above.

Also, for the purpose of this selection, and in case the smallest least-utility value associated to selling proposals comes from a plurality of Hosted Services, the requesting SME may select the Hosted Service HS$_j$ that has suffered the smallest accumulated loss in utility TLU$^j$ during a predetermined past time-period $T_{history}$. This embodiment aims at treating the Hosted Services with fairness, as explained above.

The BA then sends an "accept" message to the selected SA (Hosted Service or Free Pool as the case may be).

If, at step P7, the selected SA refuses this offer due to another BA simultaneously making a better offer (viz., requesting the same resource but at a better value), the requesting BA re-examines whether it has received non-withdrawn selling proposals as it did in step P5. If, on the contrary, at step P7, the selected SA accepts this offer, the requesting BA sends a "reject" message to all the other Seller Agents on the ring. The requested resource is then assigned to execute the software needed by the buying HS (step P8).

The position of a Hosted Service H$S_j$ on the ring associated to resource of type $i$ will then change when its least-utility value least$_i^j$ changes. The following cases are possible:

• the least-utility value least$^j$ increases (buying Hosted Service): in this case, the HS will move up the ring by exchanging successive values of its previous and next pointers with the next neighbor on the increasing side of the ring; or
• the least-utility value least$_i^j$ decreases (selling Hosted Service): in this case, the HS will move down the ring by exchanging successively its previous and next pointers with the next neighbor on the decreasing side of the ring.

In either case, the HS starts by informing its neighbors of the change. Once the neighbors have updated their pointers, then the moving HS inserts itself at the new position on the ring.

To conclude, a numerical example of the allocation algorithm according to the invention will now be presented, only for the sake of non-limitative illustration of the invention.

Let us consider a platform offering, say, two Hosted Services: $HS_1$ (say, a videoconferencing service), and $HS_2$ (say, a video-on-demand server).

Let us also assume that the utility value of interest on this platform is associated to "revenue", that is, the "profit" made by the Hosted Service by offering a resource to some end customers. In the case of a videoconferencing service, additional resources will be needed to host new videoconference sessions.

The platform supports a resource type called RT1 corresponding to a given computer profile (defined according to CPU speed, memory size, processor type, and so on). This resource type RT1 receives the label $i$ =1 in the listing of resources available on the platform. Specifically, the platform comprises, say, 4 such resources of type RT1.

Initially, all resources belong to the Free Pool, and are hence represented by the seller agent called $SA_{freepool}$. The resources belonging to the Free Pool all have utility values equal to (-1), which, as mentioned above, is an administrator-set value. The contribution to $U_{total}$ due to resource type RT1 is then: $4 \cdot u_1^{freepool} = -4$.

The service $HS_1$ is started first. At start-up, it is provided with the coordinates of the $SA_{freepool}$ which will enable the new service to join the arbitration ring. According to step (P1), the $BA_{HS1}$ requests 1 resource of type RT1. The utility value of the resource needed by $HS_1$ has been computed to be, say, 25 units. The protocol described in the previous steps is executed by the Buyer Agent, and ends in the allocation of 1 resource to this service, so that $r_1^1 = 1$, $U_1^1 = 25$ and $\mathrm{least}_1^1 = 25$. The contribution to $U_{total}$ due to resource type RT1 is then:

$$U_1^1 + 3 \cdot u_1^{freepool} = 25 - 3 = 22.$$

Next, the Hosted Service $HS_2$ is started. It is provided with the coordinates of $SA_{freepool}$ so that it can join the arbitration ring for resource type RT1 ($i$ = 1). It executes the protocol to join the ring by acquiring knowledge of its left and right neighbors from $SA_{freepool}$. Since the $HS_2$ is just starting and has no resources of type RT1, it will be inserted on the ring between the $HS_1$ and the $SA_{freepool}$. $HS_2$ calculates its initial resource requirement as being, say, 4 resources of type RT1, and evaluates the utility for each resource to be, say, 80, 60, 40 and 20. The $BA_{HS2}$ starts the allocation protocol by sending sequentially 4 messages to $SA_{freepool}$ in order to request resources following, for example, the above order of utility values. The first 3 requests are then satisfied and 3 resources of RT1 type are allocated to $BA_{HS2}$, so that $r_1^2$ = 3, $U_1^2 = 180$ and $\mathrm{least}^2_1$ = 40. The resource request at a utility value of 20 cannot be satisfied since the platform comprises a total of only 4 resources of type RT1, one of which has already been allocated to $HS_1$ with a utility value of 25, which is greater than 20, so that we still have $r_1^1 = 1$ and $U_1^1 = 25$. $BA_{HS2}$ will now move one step up the ring since $\mathrm{least}_1^2 > \mathrm{least}_1^1$. The contribution to $U_{total}$ due to resource type RT1 is then: $U_1^1 + U_1^2$ =25+180=205.

Next, the QoS Monitor of $HS_1$ detects the following changes:

(i) the first Hosted Service $HS_1$ is executing, say, a videoconference for a client belonging to a new billing category, so that the utility value of its resource of type RT1 has gone up to, say, 80, and
(ii) the QoS Monitor has detected that new resources of type RT1, whose utility value is, say, 50, need be allocated to $HS_1$.

Then, $BA_{HS1}$ sends a "buy" request to its predecessor in the ring, namely $SA_{HS2}$. This request is also propagated down the chain until it reaches the Free Pool. Since the Free Pool is currently empty as far as resource type RT1 is concerned, the request can be satisfied only by depriving $SA_{HS2}$ of one of its resources. Hence the resource currently allocated to $HS_2$ at a utility value of 40 is reallocated to $HS_1$'s new service with a utility value of 50, so that we now have $r_1^1 = 2$, $U_1^1 = 130$, $\mathrm{least}_1^1$ = 50, $r^2_1 = 2$, $U^2_1 = 140$ and $\mathrm{least}^2_1 = 60$. The contribution to $U_{total}$ due to resource type RT1 is then: $U_1^1 + U_1^2$ =130 + 140 = 270. The respective positions of $BA_{HS1}$ and $BA_{HS2}$ on the ring remain unchanged since we still have $\mathrm{least}_1^2 > \mathrm{least}_1^1$. $HS_2$ updates its history by adding a first entry registering the loss of a utility value equal to 40 at the current time.

**Claims**

1. A system for managing the allocation of data-processing resources in a platform having a plurality of computers interconnected via a network, **characterized in that** each Hosted Service $HS_j$ (where $j$ =1,2,...) offered by the platform, as well as a Free Pool of resources, are equipped with a Service Management Environment (SME) able to provide a utility value for each of the resources currently owned by its associated Hosted Service or Free Pool, and **in that**, in case a new resource is required by a given Hosted Service, this Hosted Service is able to negotiate with the Free Pool and other Hosted Services, in order to acquire the required resource from either the Free Pool or another Hosted Service after it is verified that the re-allocation of the resource leads to an increase in the total utility $U_{total}$ over the platform.

2. A system according to claim 1, **characterized in that** each SME comprises a Quality of Service Monitor able to initiate a request for said required resource.

3. A system according to claim 2, **characterized in that** the Quality of Service Monitor associated to the Free Pool is able to initiate a request for said required resource at predetermined times, for each type of resource i (where i =1,...,$M$) available on the platform.

4. A system according to claim 2 or claim 3, **characterized in that** at least one Quality of Service Monitor associated to a Hosted Service is able to forecast a future need for a new resource, and to estimate the utility value that will be provided by this new resource if allocated to this Hosted Service.

5. A system according to claim 4, **characterized in that** said estimation is done on the basis of the configuration of the minimum unassigned resources that should be kept by its associated Hosted Service in order to be able to respond to future planned and unplanned service demands.

6. A system according to any of claims 1 to 5, **characterized in that** each SME comprises a Buyer Agent able to send to other SMEs a request to acquire a resource of a given type.

7. A system according to any of claims 1 to 6, **characterized in that** each SME associated to a Hosted Service $HS_j$ comprises a Seller Agent able to provide the least-utility value $\text{least}_i^j$ for each type of resource currently owned by this Hosted Service.

8. A system according to claim 7, **characterized in that** each Seller Agent associated to a Hosted Service $HS_j$ is able to provide the accumulated utility value $TLU^j$ lost by this Hosted Service during a predetermined past time-period $T_{history}$.

9. A method for managing the allocation of data-processing resources in a platform having a plurality of computers interconnected via a network, **characterized in that**, each Hosted Service offered by the platform as well as a Free Pool of resources having been equipped with a Service Management Environment (SME) able to provide a utility value for each of the resources currently owned by its associated Hosted Service or Free Pool, it comprises by the following steps:

  (viii) a SME initiates (P1) a request for a resource of a given type;
  (ix) this requesting SME sends (P2,P3) a "buy" message to the SMEs who currently own a resource of the same type as the one requested;
  (x) all SMEs who own a resource of that type having a respective least-utility value smaller than the utility of the resource requested, respond (P4) to the offer with a "selling proposal" message to the requesting SME along with the value of that respective least-utility value;
  (xi) the requesting SME waits (P4) for such selling proposals during a predetermined time interval $T_{response}$;
  (xii) if the requesting SME receives (P5) no selling proposal within said time interval $T_{response}$, the requesting SME will either retry after a delay, or quit; if, on the contrary, the requesting SME has received (P5) at least one selling proposal which has not been subsequently withdrawn, the requesting SME selects (P6) one of the proposing SMEs, and sends an "accept" message to this selected SME;
  (xiii) the requesting SME waits (P7) for the selected SME to confirm or withdraw its selling proposal;
  (xiv) if the selected SME withdraws its selling proposal, the requesting SME returns to step (v); if, on the contrary, the selected SME confirms its selling proposal, the requested resource is assigned (P8) to execute the software needed by the requesting SME,

the method being further **characterized in that**, for any resource type $i$ (where i =1,...,M) available on the platform, the value of utility $unot_i^j$ of a resource of type i no longer in use by a Hosted Service $HS_j$ (where $j$ = 1,2,...), but still owned by this Hosted Service, and the value of utility $u_i^{freepool}$ of a resource of type i owned by the Free Pool are such that: $unot_i^j < u_i^{freepool}$.

10. A method according to claim 9, **characterized in that**, for the purpose of selecting a proposing SME, the requesting SME selects the SME with the smallest least-utility value among those proposing SMEs for whom the difference between the requested new utility and their respective least-utility value exceeds a predefined threshold $\Delta u > 0$.

11. A method according to claim 9, **characterized in that**, in case the smallest least-utility value associated to selling proposals comes from a plurality of Hosted Services, the requesting SME selects the Hosted Service $HS_j$ that has suffered the smallest accumulated loss in utility $TLU^j$ during a predetermined past time-period $T_{history}$.

12. Non-removable data storage means containing elec-

**EP 1 873 639 A1**

tronic data-processing program code instructions for executing the steps of a method according to any one of claims 9 to 11.

13. Partially or totally removable data storage means containing electronic data-processing program code instructions for executing the steps of a method according to any one of claims 9 to 11.

14. A data-processing device comprising storage means according to claim 12 or claim 13.

15. A utility platform comprising a data-processing device according to claim 14.

16. A computer program containing instructions such that, when said program controls a programmable data-processing device, said instructions cause said data-processing device to execute a method according to any one of claims 9 to 11.

**FIG. 1**

**FIG. 2**

A QoS Monitor initiates
resource request    P1

Buyer Agent sends
« buy » message to other
Service Management
Environments    P2,P3

Buyer Agent collects
responses until delay
expires    P4

No selling
proposal ?
P5

Yes

No

Buyer Agent selects
Seller Agent    P6

Seller Agent
confirms ?
P7

No

Yes

Resource reallocated
P8

# FIG. 3

**EP 1 873 639 A1**

European Patent Office

**EUROPEAN SEARCH REPORT**

Application Number

EP 06 29 1096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 353 915 A (MITEL CORP [CA]) 7 March 2001 (2001-03-07) * page 1, lines 4-6 * * page 7, lines 13-23 * * page 25, lines 7-9 * * page 26, lines 4-17 * * page 28, lines 23-25 * | 1-6 | INV. G06F9/46 |
| A | XIAOQIN ZHANG ET AL: "Multi-dimensional, multistep negotiation for task allocation in a cooperative system" AUTONOMOUS AGENTS AND MULTI-AGENT SYSTEMS KLUWER ACADEMIC PUBLISHERS NETHERLANDS, vol. 10, no. 1, January 2005 (2005-01), pages 5-40, XP002416130 ISSN: 1387-2532 Section 1: Introduction | 1-16 | |
| A | EYMANN T ET AL: "Decentralized vs. Centralized Economic Coordination of Resource Allocation in Grids" IN: FERNÁNDEZ RIVERA ET AL (EDITORS), GRID COMPUTING, FIRST EUROPEAN ACROSS GRIDS CONFERENCE, SANTIAGO DE COMPOSTELA, SPAIN, FEBRUARY 13-14, 2003, REVISED PAPERS, SPRINGER LNCS 2970, 2004, pages 9-16, XP019002873 * the whole document * | 1-16 | TECHNICAL FIELDS SEARCHED (IPC) G06F |
| A | FOUNDATION FOR INTELLIGENT PHYSICAL AGENTS (FIPA): "FIPA Contract Net Interaction Protocol Specification" INTERNET DISCLOSURE, [Online] 2002, XP002416131 Retrieved from the Internet: URL:http://www.fipa.org/specs/fipa00029/SC00029H.pdf> [retrieved on 2007-01-23] * the whole document * | 9-16 | |

The present search report has been drawn up for all claims

| Place of search | Date of completion of the search | Examiner |
|---|---|---|
| Munich | 23 January 2007 | DEL CASTILLO, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1096

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2007

| Patent document cited in search report | | Publication date | Patent family member(s) | | Publication date |
|---|---|---|---|---|---|
| GB 2353915 | A | 07-03-2001 | CA | 2313614 A1 | 09-01-2001 |

EPO FORM P0459